(19) Europäisches Patentamt / European Patent Office / Office européen des brevets

(11) **EP 3 641 026 B1**

(12) **EUROPEAN PATENT SPECIFICATION**

(45) Date of publication and mention of the grant of the patent:
**25.12.2024 Bulletin 2024/52**

(21) Application number: **19178948.6**

(22) Date of filing: **07.06.2019**

(51) International Patent Classification (IPC):
$H01M\ 4/133^{(2010.01)}$    $H01M\ 4/587^{(2010.01)}$
$H01M\ 10/0525^{(2010.01)}$    $H01M\ 4/505^{(2010.01)}$
$H01M\ 4/525^{(2010.01)}$    $H01M\ 4/02^{(2006.01)}$
$H01M\ 4/131^{(2010.01)}$

(52) Cooperative Patent Classification (CPC):
**H01M 4/133; H01M 4/587; H01M 10/0525;**
H01M 4/131; H01M 4/505; H01M 4/525;
H01M 2004/027; H01M 2220/30; Y02E 60/10;
Y02P 70/50

(54) **SECONDARY BATTERY**

SEKUNDÄRBATTERIE

BATTERIE SECONDAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.10.2018 CN 201811209254**

(43) Date of publication of application:
**22.04.2020 Bulletin 2020/17**

(73) Proprietor: **Contemporary Amperex Technology (Hong Kong) Limited**
**Central, Central And Western District (HK)**

(72) Inventors:
• **WANG, Jiazheng**
**Ningde, Fujian 352100 (CN)**
• **KANG, Meng**
**Ningde, Fujian 352100 (CN)**

• **SHEN, Yuliang**
**Ningde, Fujian 352100 (CN)**
• **HE, Libing**
**Ningde, Fujian 352100 (CN)**

(74) Representative: **Gong, Jinping**
**CocreateIP**
**Neumarkterstr. 21**
**81673 München (DE)**

(56) References cited:
**WO-A1-2017/104145**    **US-A1- 2010 233 543**

• **"A Basic Guide to Particle Characterization", MALVERN INSTRUMENTS WORLDWIDE - WHITE PAPER, 2 May 2012 (2012-05-02), pages 1 - 26, XP055089322, Retrieved from the Internet <URL:http://golik.co. il/Data/ABasicGuidtoParticleCharacterization(2) _1962085150.pdf> [retrieved on 20180404]**

**Description**

## RELATED APPLICATIONS

The present application claims priority to Chinese patent application No. CN201811209254.9, filed on October 17, 2018.

## FIELD OF THE PRESENT INVENTION

The present invention relates to the field of battery, and particularly relates to a secondary battery as specified in any of claims 1-12.

## BACKGROUND OF THE PRESENT INVENTION

Rechargeable batteries are widely used in the field such as mobile phones, computers, household electric appliances, electric power tools and the like due to significant characteristics of light weight, high energy density, no pollution, none memory effect, long service life and the like. The charging time has got more and more attention from end consumers and is also one of the key factors limiting the popularizion of the rechargeable batteries.

From the viewpoint of technical principle, a core affecting the charging speed of the battery lies in the negative electrode plate. In order to obtain a battery having high energy density, the weight of the active material coated on the unit area of the current collector generally increases when the negative electrode plate is designed, however, the charging capability of the battery often does not meet the requirements; when the charging capability of the battery is satisfied by reducing the weight of the active material coated on the unit area of the current collector, the energy density of the battery does not meet the requirements. Moreover, there is a serious heat problem during the fast charging process of the battery, which also affects the service safety of the end consumers. WO 2017/104145 A1 relates to a lithium ion secondary battery provided with a positive electrode, a negative electrode and a separator. US 2010/233543 AI describes a non-aqueous secondary battery comprising a positive electrode which has a positive electrode active material layer.

Therefore, how to obtain a battery having high safety performance and fast charging capability without compromising the energy density is the key in the design and the engineering of the negative electrode plate.

## SUMMARY OF THE PRESENT INVENTION

In view of the problem existing in the background, an object of the present invention is to provide a secondary battery as specified in the independent claim 1, which has the characteristics of long cycle life, high energy density and fast charging capability at the same time. Preferred embodiments are defined in dependent claims 2-12.

The present invention provides a secondary battery, which comprises a positive electrode plate, a negative electrode plate, an electrolyte and a separator, the negative electrode plate comprises a negative current collector and a negative film, the negative film is provided on at least one surface of the negative current collector and comprises a negative active material. The negative active material comprises graphite, and the negative active material is obtained by the process of being tested in a button half battery:

the button half battery is discharged to 5 mV at a constant current of 0.05 C, and the obtained capacity is recorded as X;
then the button half battery is discharged to 5 mV at a constant current of 50 $\mu$A, and the obtained capacity is recorded as A;
then the button half battery is discharged to 5 mV at a constant current of 10 $\mu$A, and the obtained capacity is recorded as B; and $0.02 \leq (A+B)/X \leq 0.50$;
the negative electrode plate satisfies a relationship: $0.05 \leq (A/X) \times CW \leq 2.00$, CW represents a coating weight of the negative electrode plate per unit area with a unit of $mg/cm^2$;
wherein the positive electrode plate comprises a positive current collector and a positive film, the positive film is provided on at least one surface of the positive current collector and comprises a positive active material, the positive active material is one or more selected from a group consisting of lithium nickel cobalt manganese oxide, lithium nickel cobalt aluminum oxide and olivine-type lithium-containing phosphate.

Preferably, when the negative active material is tested in a button half battery, the negative active material satisfies a relationship: $0.02 \leq (A+B)/X \leq 0.27$. More preferably, when the negative active material is tested in a button half battery, the negative active material satisfies a relationship:

$$0.02 \leq (A+B)/X \leq 0.05.$$

The negative electrode plate satisfies a relationship: $0.08 \leq (A/X) \times CW \leq 0.32$. $0.01 \leq A/X \leq 0.25$. Preferably, $0.01 \leq A/X \leq 0.04$.

The coating weight of the negative electrode plate per unit area represented by CW is 4 $mg/cm^2$~15 $mg/cm^2$. Preferably, the coating weight of the negative electrode plate per unit area represented by CW is 8.0 $mg/cm^2$~15 $mg/cm^2$.

A particle size of the negative active material represented by D50 is 4 $\mu$m~18 $\mu$m. Preferably, the particle size of the negative active material represented by D50 is 4 $\mu$m~16 $\mu$m.

An active specific surface area of the negative electrode plate is 2 $cm^2/g$~12 $cm^2/g$.

The graphite is one or more selected from a group consisting of artificial graphite and natural graphite.

The negative active material further comprises one or more selected from a group consisting of soft carbon, hard carbon and silicon-based material. Preferably, the negative active material further comprises silicon-based material, the silicon-based material is one or more selected from a group consisting of elemental silicon, silicon oxide, silicon carbon composite and silicon alloy.

Compared with the existing technologies, the present invention at least includes the following beneficial effects: in the present invention, by selecting a negative active material having good dynamics performance, a secondary battery having long cycle life, high energy density and fast charging capability at the same time is obtained.

## DETAILED DESCRIPTION

Hereinafter a negative electrode plate and a secondary battery according to the present invention are described in detail.

Firstly, a negative electrode plate according to a first aspect of the present invention is described. The negative electrode plate comprises a negative current collector and a negative film, the negative film is provided on at least one surface of the negative current collector and comprises a negative active material.

The negative active material satisfies the following characteristics when the negative active material is tested in a button half battery: the button half battery is discharged to 5 mV at a constant current of 0.05 C (which corresponds to the intercalating process with respect to the active ions into the negative active material), and the obtained capacity is recorded as X; then the button half battery is discharged to 5 mV at a constant current of 50 $\mu$A, and the obtained capacity is recorded as A; then the button half battery is discharged to 5 mV at a constant current of 10 $\mu$A, and the obtained capacity is recorded as B; and $0.02 \leq (A+B)/X \leq 0.50$.

It should be noted that, the preparation of the button half battery may refer to national standards or industry standards. For example, the selected negative active material, a binder commonly used in the industry and a conductive agent commonly used in the industry are used to prepare an electrode plate, and a round metal sheet (such as a lithium sheet, a sodium sheet and the like) is used as a counter electrode, so a button half battery is prepared.

Specifically, the button half battery may be prepared as follows: the selected negative active material, super P and polyvinylidene fluoride (PVDF) according to a certain mass ratio (for example 92:3:5) are uniformly mixed with N-methylpyrrolidone (NMP, solvent) to obtain a slurry; then the slurry is coated on an aluminum foil, drying is then performed to remove the solvent, which is then followed by plate cutting and pressing, then a round electrode plate is obtained; then the round electrode plate and a round lithium sheet used as the counter electrode are assembled into a button half battery in a glove box, here the electrolyte salt used in the button half battery may be $LiPF_6$, the concentration of the electrolyte salt may be 1 mol/L, the organic solvent used in the button half battery may be a mixture of ethylene carbonate and ethyl methyl carbonate according to a volume ratio of 1:1; then the button half battery is discharged to 5 mV at a constant current of 0.05 C, and the obtained capacity is recorded as X;

then the button half battery is discharged to 5 mV at a constant current of 50 $\mu$A, and the obtained capacity is recorded as A;

then the button half battery is discharged to 5 mV at a constant current of 10 $\mu$A, and the obtained capacity is recorded as B.

The negative electrode plate needs to undergo the following three electrochemical processes during the charging process of the battery: (1) the active ions (such as lithium ions, sodium-ions and the like) deintercalate from the positive active material and enter into the electrolyte, and then enter into the channels of the porous negative electrode plate along with the electrolyte, so that a liquid phase conduction process of the active ions in the channels of the porous negative electrode plate is completed; (2) the active ions exchange charges with the electrons on the surface of the negative active material; (3) the active ions enter into the bulk structure of the negative active material from the surface of the negative active material through a solid phase conduction process.

The solid phase conduction process with respect to the active ions in the negative active material has a very impormant effect on improving the fast charging capability of the battery. The better the dynamics performance of the negative active material is, the smaller the solid phase conduction resistance with respect to the active ions in the negative active material is, the higher the weight of the negative active material coated on the unit area of the negative current collector can be maintained, therefore the battery can have long cycle life, high energy density and fast charging capability at the same time.

The inventors has done a large number of researches and found that, when the negative active material is tested in the button half battery and the obtained capacities of the button half battery satisfy a relationship $0.02 \leq (A+B)/X \leq 0.50$, the battery can have fast charging capability and long cycle life at the same time without compromising the high energy density.

The reaction with respect to the active ions to intercalate into the negative active material usually is incomplete during the discharging process of the button half battery, a part of the active ions cannot intercalate into the negative active material, when under the same condition, the more the amount of active ions failing to intercalate into the negative active material is, the larger the polarization of the negative active material is, however, the larger the polarization of the negative active material is, the more difficult it is to improve the fast charging capability of the battery.

The inventors found that, the polarization of the negative active material can be characterized by $(A+B)/X$, the smaller the value of $(A+B)/X$ is, the smaller the polarization of the negative active material is, the better the dynamics performance of the negative active material is, the higher the weight of the negative active material coated on the unit area of the negative current collector can be maintained, and the higher the energy density of the battery is. If the value of $(A+B)/X$ is too small, for example the value of $(A+B)/X$ is less than 0.02, although the polarization of the negative active material is very small, which may better improve the fast charging capability of the battery, the active ions are prone to transfer onto the surface of this kind of negative active material during the standby process of the battery, the problems that the self-discharge increases and the side reactions between this kind of negative active material and the electrolyte increase easily occur, therefore the requirement on long cycle life of the battery cannot be satisfied. And moreover, the value of $(A+B)/X$ cannot be too large, the inventors found that, when the value of $(A+B)/X$ is more than 0.50, the polarization of this kind of negative active material is too large, the negative active material can only accept the active ions under a smaller current, therefore it is very difficult to improve the fast charging capability of the battery; and the negative film needes to be both thin and light in order to make the battery have a fast charging capability, which will compromise the high energy density of the battery.

In some embodiments of the present invention, a lower limit value of $(A+B)/X$ may be 0.02, 0.03, 0.04, 0.05 and 0.06; an upper limit value of $(A+B)/X$ may be 0.06, 0.08, 0.10, 0.12, 0.14, 0.16, 0.18, 0.20, 0.22, 0.24, 0.26, 0.28, 0.30, 0.35, 0.40, 0.45 and 0.50.

Preferably, when the negative active material is tested in a button half battery, the negative active material satisfies a relationship: $0.03 \leq (A+B)/X \leq 0.35$.

The liquid phase conduction process with respect to the active ions in the channels of the porous negative electrode plate also has a very important effect on improving the fast charging capability of the battery, and the liquid phase conduction capability with respect to the active ions in the channels of the porous negative electrode plate is related with the coating weight of the negative electrode plate. Generally, the larger the coating weight of the negative electrode plate per unit area is, the more difficult the liquid phase conduction process with respect to the active ions in the channels of the porous negative electrode plate is. A/X is also an index for characterizing the polarization of the negative active material, the larger the value of A/X is, the larger the polarization of the negative active material is, the more difficult the active ions enter into the bulk structure of the negative active material, and the worse the dynamics performance of the negative active material is.

The inventors has done a large number of researches and found that, when the polarization of the negative active material characterizd by A/X and the coating weight of the negative electrode plate per unit area represented by CW satisfy a relationship $0.05 \leq (A/X) \times CW \leq 4.50$, the solid phase conduction speed with respect to the active ions in the bulk structure of the negative active material and the liquid phase conduction speed with respect to the active ions in the channels of the porous negative electrode plate both are optimal, therefore the battery can have higher fast charging capability without compromising the energy density. CW represents a coating weight of the negative electrode plate per unit area with a unit of $mg/cm^2$.

If the value of $(A/X) \times CW$ is more than 4.50, the dynamics performance of the negative active material may be worse or the coating weight of the negative electrode plate per unit area may be higher. When the dynamics performance of the negative active material is worse, the charge exchange process with respect to the active ions on the surface of the negative active material and the solid phase conduction process with respect to the active ions in the bulk structure of the negative active material both become difficult, the fast charging capability of the battery is worse; when the coating weight of the negative electrode plate per unit area is higher, the energy density of the battery is higher, however, the liquid phase conduction process with respect to the active ions in the channels of the porous negative electrode plate becomes difficult, therefore the improvement on the fast charging capability of the battery is smaller.

If the value of $(A/X) \times CW$ is less than 0.05, the dynamics performance of the negative active material may be better or the coating weight of the negative electrode plate per unit area may be smaller. When the dynamics performance of the negative active material is better, the polarization of the negative active material is smaller, which improves the fast charging capability of the battery, however, the surface of this kind of negative active material is not stable, the active ions are prone to transfer onto the surface of this kind of negative active material, the problems that the self-discharge increases and the side reactions between this kind of negative active material and the electrolyte increase easily occur, thereby affecting the cycle life of the battery; when the coating weight of the negative electrode plate per unit area is smaller, the contact area between the unstable surface of the negative active material and the electrolyte increases, which further affects the improvement on the cycle life of the battery, and it is also difficult to make the battery have better fast charging capability and higher energy density at the same time.

In some embodiments of the present invention, a lower limit value of $(A/X) \times CW$ may be 0.05, 0.06, 0.07, 0.08, 0.09, 0.10, 0.12, 0.14 and 0.16; an upper limit value of $(A/X) \times CW$ may be 0.10, 0.20, 0.40, 0.60, 0.80, 1.00, 1.20, 1.50, 1.80, 2.00, 2.20, 2.50, 2.80, 3.00, 3.20, 3.50, 3.80, 4.00, 4.20 and 4.50.

Preferably, $0.07 \leq (A/X) \times CW \leq 3.50$.

Preferably, the negative active material satisfies a relationship $0.01 \leq A/X \leq 0.45$. A lower limit value of A/X may be 0.01, 0.02, 0.03, 0.04, 0.05, 0.06, 0.07 and 0.08; an upper limit value of A/X may be 0.06, 0.08, 0.10, 0.12, 0.14, 0.16, 0.18, 0.20, 0.22, 0.24, 0.26, 0.28, 0.30, 0.32, 0.35, 0.38, 0.40, 0.42 and 0.45. More preferably, the negative active material satisfies a relationship $0.02 \leq A/X \leq 0.30$. When the dynamics parameter of the negative active material falls within the above preferred ranges thereof, the negative electrode plate has higher homogeneity, which can preventing the negative active material having good dynamics performance from generating more side reactions with the electrolyte and in turn excessively affect the cycle life of the battery due to the high surface instability of the negative active material, and also preventing the negative active material having worse dynamics performance and larger polarization from excessively affect the improvement on the fast charging capability of the battery by hindering the charge exchange process with respect to the active ions on the surface of the negative active material and the solid phase conduction process with respect to the active ions in the bulk structure of the negative active material.

Preferably, the coating weight of the negative electrode plate per unit area represented by CW is 3 mg/cm$^2$~20 mg/cm$^2$. More preferably, the coating weight of the negative electrode plate per unit area represented by CW is 4 mg/cm$^2$~15 mg/cm$^2$. When the coating weight of the negative electrode plate per unit area falls within the above preferred ranges thereof, the negative electrode plate can have high volume energy density while maintaining good dynamics performance, in turn the battery can have high energy density while maintaining better fast charging capability.

In the negative electrode plate of the present invention, preferably, a particle size of the negative active material represented by D50 is 4 $\mu$m~18 $\mu$m. More preferably, the particle size of the negative active material represented by D50 is 4 $\mu$m~16 $\mu$m. When the particle size of the negative active material represented by D50 falls within the above preferred ranges thereof, the negative electrode plate has higher homogeneity, which can avoid the negative active material with too small particle size from affecting the performances of the battery by generating more side reactions with the electrolyte, and also avoid the negative active material with too large particle size from affecting the performances of the battery by hindering the solid phase conduction process with respect to the active ions in the bulk structure of the negative active material.

In the negative electrode plate of the present invention, preferably, an active specific surface area of the negative electrode plate is 2 cm$^2$/g~12 cm$^2$/g. More preferably, the active specific surface area of the negative electrode plate is 3 cm$^2$/g~10 cm$^2$/g. When the active specific surface area of the negative electrode plate is larger, the electrochemical activity of the negative electrode plate is higher, the side reactions between the negative electrode plate and the electrolyte increases, the thickness of the SEI membrane on the surface of the negative electrode plate increases, the resistance with respect to the active ions to pass through the SEI membrane on the surface of the negative electrode plate and enter into the negative electrode plate increases, the dynamics performance of the negative electrode plate decreases, which affects the improvement on the fast charging capability of the battery. When the active specific surface area of the negative electrode plate is smaller, the amount of the active sites in the negative electrode plate is less, which also affects the improvement on the fast charging capability of the battery. Therefore when the active specific surface area of the negative electrode plate falls within the above preferred ranges thereof, the negative electrode plate can have better dynamics performance, and in turn the battery can have higher fast charging capability.

The test process of the active specific surface area of the negative electrode plate is described as follows.

The negative electrode plate of the present invention with a weight of m is used as a cathode, a lithium metal sheet is used as an anode, ferrocene with a concentration of 50 mmol/L is added into an electrolyte, then the cathode, the anode and the electrolyte are assembled into a button half battery. Four half button batteries used as parallel samples are scanned respectively at scanning rates v of 0.1 mV/s, 0.3 mV/s, 0.5 mV/s and 1 mV/s to obtain a series of cyclic voltammetry curves under the different scanning rates, then a peak current $i_p$ of each cyclic voltammetry curve is extracted using a EC-Lab software. A linear graph of $i_p$ and $\sqrt{v}$ is obtained where the square root of the scanning rate v ($\sqrt{v}$) is used as X-coordinate and the peak current $i_p$ is used as Y-coordinate, and then the slope K of the linear graph is obtained.

In a Randles-Sevick equation, $i_p = 2.69 \times 10^5 n^{\frac{3}{2}} Ac\sqrt{D}\sqrt{v}$ , therefore the slope is obtained according to an equation $K = 2.69 \times 10^5 n^{\frac{3}{2}} Ac\sqrt{D}$ . n representes an electron transfer number of the electrode reaction and the value thereof is related with the specific type of the probe, and here the value thereof is 1; c representes a concentration of ferrocene, here the value thereof is 50 mmol/L; D representes a diffusion coefficient of the probe ferrocene, here the value thereof is $2.1 \times 10^{-6}$ cm$^2$/s; A representes an active surface area of the negative electrode plate, and is obtained according to an equation $A = K / (2.69 \times 10^5 n^{\frac{3}{2}} c\sqrt{D})$ . The active specific surface area of the negative electrode plate is a ratio of the active surface area of the negative electrode plate represented by A to the weight of the negative electrode plate represented by m.

In the negative electrode plate of the present invention, the type of the negative active material is not specifically limited and may be selected based on actual demands. Preferably, the negative active material may be one or more selected from a group consisting of carbon-based material, silicon-based material, tin-based material and lithium titanate. The carbon-based material may be one or more selected from a group consisting of graphite, soft carbon, hard carbon, carbon fiber and mesocarbon microbeads; the graphite may be one or more selected from a group consisting of artificial graphite and natural graphite. The silicon-based material may be one or more selected from a group consisting of elemental silicon, silicon oxide, silicon carbon composite and silicon alloy. The tin-based material is one or more selected from a group consisting of elemental tin, tin oxide compound and tin alloy. More preferably, the negative active material may be one or more selected from a group consisting of carbon-based material and silicon-based material.

In the negative electrode plate of the present invention, the negative film may be provided on one of the surfaces of the negative current collector or the negative film may be provided on both surfaces of the negative current collector. The negative film may further comprise a conductive agent and a binder, the types and the contents of the conductive agent and the binder are not specifically limited and may be selected based on actual demands. The type of the negative current collector is not specifically limited and may be selected based on actual demands.

It should be noted that, when the negative film is provided on both surfaces of the negative current collector, as long as the negative film provided on any one of the surfaces of the negative current collector satisfies the present invention, it is considered that the negative electrode plate falls within the protection scope of the present invention.

Next a secondary battery according to a second aspect of the present invention is described, the secondary battery comprises the negative electrode plate according to the first aspect of the present invention.

Moreover, the secondary battery of the present invention further comprises a positive electrode plate, an electrolyte and a separator.

In the secondary battery of the present invention, the positive electrode plate may comprise a positive current collector and a positive film, the positive film is provided on at least one surface of the positive current collector and comprises a positive active material, the type and the specific composition of the positive electrode plate are not specifically limited and may be selected based on actual demands. The positive film may be provided on one of the surfaces of the positive current collector or the positive film may be provided on both surfaces of the positive current collector. The positive film may further comprise a conductive agent and a binder, the types and the contents of the conductive agent and the binder are not specifically limited and may be selected based on actual demands. The type of the positive current collector is not specifically limited and may be selected based on actual demands.

It should be noted that, the secondary battery according to the second aspect of the present invention may be a lithium-ion battery, a sodium-ion battery and any other battery using the negative electrode plate according to the first aspect of the present invention.

When the secondary battery is the lithium-ion battery, the positive active material may be selected from lithium cobalt oxide, lithium nickel oxide, lithium manganese oxide, lithium nickel manganese oxide, lithium nickel cobalt manganese oxide, lithium nickel cobalt aluminum oxide and olivine-type lithium-containing phosphate, but the present invention is not limited thereto, other conventionally known materials that can be used as the positive active material of the lithium-ion battery can also be used. These positive active materials may be used alone or may be used as two or more of them in combination. Preferably, the positive active material may be one or more selected from a group consisting of LiCoO$_2$, LiNiO$_2$, LiMnO$_2$, LiMn$_2$O$_4$, LiNi$_{1/3}$Co$_{1/3}$Mn$_{1/3}$O$_2$ (NCM333), LiNi$_{0.5}$Co$_{0.2}$Mn$_{0.3}$O$_2$ (NCM523), LiNi$_{0.6}$Co$_{0.2}$Mn$_{0.2}$O$_2$ (NCM622), LiNi$_{0.8}$Co$_{0.1}$Mn$_{0.1}$O$_2$ (NCM811), LiNi$_{0.85}$Co$_{0.15}$Al$_{0.05}$O$_2$, LiFePO$_4$ (LFP) and LiMnPO$_4$.

When the secondary battery is the sodium-ion battery, the positive active material may be selected from transition metal oxide Na$_x$MO$_2$ (M represents transition metal, preferably, M is one or more selected from a group consisting of Mn, Fe, Ni, Co, V, Cu and Cr, $0 < x \leq 1$), polyanion-type material (phosphate-type, fluorophosphate-type, pyrophosphate-type, sulfate-type) and prussian blue material, but the present invention is not limited thereto, other conventionally known materials that can be used as the positive active material of the sodium-ion battery can also be used. These positive active materials may be used alone or may be used as two or more of them in combination. Preferably, the positive active material may be one or more selected from a group consisting of $NaFeO_2$, $NaCoO_2$, $NaCrO_2$, $NaMnO_2$, $NaNiO_2$, $NaNi_{1/2}Ti_{1/2}O_2$, $NaNi_{1/2}Mn_{1/2}O_2$, $Na_{2/3}Fe_{1/3}Mn_{2/3}O_2$, $NaNi_{1/3}Co_{1/3}Mn_{1/3}O_2$, $NaFePO_4$, $NaMnPO_4$, $NaCoPO_4$, prussian blue material and a material with a general formula of $A_aM_b(PO_4)_cO_xY_{3-x}$ (A is one or more selected from a group consisting of $H^+$, $Li^+$, $Na^+$, $K^+$ and $NH_4^+$; M represents transition metal cation, preferably, M is one or more selected from a group consisting of V, Ti, Mn, Fe, Co, Ni, Cu and Zn; Y represents anion of halogen, preferably, Y is one or more selected from a group consisting of F, Cl and Br; $0<a\leq4$, $0<b\leq2$, $1\leq c\leq3$, $0\leq x\leq2$).

In the secondary battery of the present invention, the separator is provided between the positive electrode plate and the negative electrode plate and functions to separate the positive electrode plate from the negative electrode plate. The type of the separator is not specifically limited, the separator may be any separator used in existing batteries, for example, the separator may be a polyethylene membrane, a polypropylene membrane, a polyvinylidene fluoride membrane and a multilayer composite membrane thereof, but the present invention is not limited thereto.

In the secondary battery of the present invention, generally, the electrolyte comprises an electrolyte salt and an organic solvent, the specific type and the specific component of the electrolyte salt and the organic solvent are not specifically limited and may be selected based on actual demands. The electrolyte may also comprise an additive, and the type of the additive is not specifically limited. The additive may be a negative film formation additive; the additive may also be a positive film formation additive; the additive may also be an additive used for improving one certain performance of the battery, such as an additive used for improving the overcharge performance of the battery, an additive used for improving the high-temperature performance of the battery, an additive used for improving the low-temperature performance of the battery and the like.

Hereinafter the present invention will be described in detail taking a lithium-ion battery as an example in combination with specific examples. It should be noted that, the examples described in the present invention are only used for explaining the present invention, and are not intended to limit the scope of the present invention.

Example 1

(1) Preparation of a positive electrode plate

The positive active material shown in table 1, super P (conductive agent) and polyvinylidene fluoride (PVDF, binder) according to a mass ratio of 96:2:2 were uniformly mixed with N-methylpyrrolidone (NMP, solvent), which then became homogeneous under stirring via a vacuum mixer, a positive slurry was obtained; then the positive slurry was uniformly coated on an aluminum foil (positive current collector), drying was then performed under room temperature and continual drying was performed in an oven, which was then followed by cold pressing and plate cutting, finally the positive electrode plate was obtained.

(2) Preparation of a negative electrode plate

The negative active material shown in table 1, super P (conductive agent), carboxymethyl cellulose (CMC, thickening agent) and styrene butadiene rubber (SBR, binder) according to a mass ratio of 94.5:1.5:1.5:2.5 were uniformly mixed with deionized water (solvent), which then became homogeneous under stirring via a vacuum mixer, a negative slurry was obtained; then the negative slurry was uniformly coated on a copper foil (negative current collector) with a coating weight per unit area represented by CW of 8 $mg/cm^2$, drying was then performed under room temperature and continual drying was performed in an oven, which was then followed by cold pressing and plate cutting, finally the negative electrode plate was obtained.

When the negative active material was tested in the button half battery, the obtained capacities of the button half battery satisfied the following characteristics: (A+B)/X was 0.02, A/X was 0.01.

(3) Preparation of an electrolyte

Ethylene carbonate (EC), ethyl methyl carbonate (EMC) and diethyl carbonate (DEC) according to a volume ratio of 1:1:1 were mixed together to obtain an organic solvent, then sufficiently dried $LiPF_6$ (lithium salt) was dissolved into the mixed organic solvent to obtain an electrolyte, and a concentration of the electrolyte was 1 mol/L.

(4) Preparation of a separator

The separator was a polyethylene membrane.

(5) Preparation of a lithium-ion battery

The positive electrode plate, the separator and the negative electrode plate were laminated in order, the separator was positioned between the positive electrode plate and the negative electrode plate so as to separate the positive electrode plate from the negative electrode plate, then the positive electrode plate, the separator and the negative electrode plate were wound together to form an electrode assembly, then the electrode assembly was put into a case, which was followed by baking, electrolyte injection, vacuum packaging, standby, formation, shaping and the like, finally a lithium-ion battery was obtained.

Preparation of the lithium-ion batteries of examples 2-18 and comparative examples 1-6 was similiar to that in example 1, and the specific differences were shown in table 1. Thereby, examples 7, 8, 10-12 and 14 in Table 1 do not form part of this invention and are regarded as comparative examples.

Hereinafter test processes of the lithium-ion batteries were described.

(1) Test of the dynamics performance

At 25 °C, the lithium-ion batteries prepared in the examples and the comparative examples were first fully charged at a constant current of x C, and then fully discharged at a constant current of 1 C for 10 cycles, then the lithium-ion batteries were fully charged at a constant current of x C, then the negative electrode plates were disassembled from the lithium-ion batteries, and the lithium precipitation on the surface of each negative electrode plate was observed. If the lithium precipitation was not observed on the surface of the negative electrode plate, the test process was repeated with a charge rate x C increased in increments of 0.1 C, until the lithium precipitation was observed on the surface of the negative electrode plate, and the test process was stopped, the charge rate x C at this time minus 0.1 C was the maximum charge rate of the lithium-ion battery.

(2) Test of the cycle performance

At 25 °C, the lithium-ion batteries prepared in the examples and the comparative examples were charged at a constant current of 3 C and discharged at a constant current of 1 C, the fully charging and discharging process was repeated until the capacity of the lithium-ion battery decayed to 80% of the initial capacity, and the cycle number of the lithium-ion battery was recorded.

(3) Test of the measured energy density

At 25 °C, the lithium-ion batteries prepared in the examples and the comparative examples were fully charged at a constant current of 1 C and fully discharged at a constant current of 1 C, the measured discharge capacity at this time was recorded; at 25 °C, the lithium-ion batteries were weighed by an electronic balance. And the measured energy density of the lithium-ion battery was a ratio of the measured discharge capacity of the lithium-ion battery diacharged at 1 C to the weight of the lithium-ion battery.

When the measured energy density was less than 80% of the targeted energy density, the measured energy density of the battery was considered to be very low; when the measured energy density was more than or equal to 80% of the targeted energy density and less than 95% of the targeted energy density, the measured energy density of the battery was considered to be lower; when the measured energy density was more than or equal to 95% of the targeted energy density and less than 105% of the targeted energy density, the measured energy density of the battery was considered to be moderate; when the measured energy density was more than or equal to 105% of the targeted energy density and less than 120% of the targeted energy density, the measured energy density of the battery was considered to be higher; when the measured energy density was more than or equal to 120% of the targeted energy density, the measured energy density of the battery was considered to be very high.

Table 1: Parameters and test results of examples 1-18 and comparative examples 1-6

| | Positive active material | Negative active material | (A+B)/X | A/X | CW (mg/cm$^2$) | (A/X)×CW | Maximum charge rate | Cycle number | Measured energy density |
|---|---|---|---|---|---|---|---|---|---|
| Example 1 | LFP | graphite | 0.02 | 0.01 | 8.0 | 0.08 | 4.1C | 3300 | moderate |
| Example 2 | LFP | graphite | 0.03 | 0.02 | 8.0 | 0.16 | 4.3C | 3600 | moderate |
| Example 3 | LFP | graphite | 0.05 | 0.04 | 8.0 | 0.32 | 4.2C | 3100 | moderate |
| Example 4 | LFP | graphite | 0.18 | 0.15 | 8.0 | 1.20 | 4.0C | 5000 | moderate |

(continued)

| | Positive active material | Negative active material | (A+B) /X | A/X | CW (mg/cm$^2$) | (A/X) ×CW | Maximum charge rate | Cycle number | Measured energy density |
|---|---|---|---|---|---|---|---|---|---|
| Example 5 | LFP | graphite | 0.27 | 0.23 | 8.0 | 1.84 | 4.0C | 5500 | moderate |
| Example 6 | LFP | graphite | 0.35 | 0.25 | 8.0 | 2.00 | 3.6C | 3200 | moderate |
| Example 7 | LFP | graphite | 0.45 | 0.40 | 8.0 | 3.20 | 3.2C | 3100 | moderate |
| Example 8 | LFP | graphite | 0.50 | 0.42 | 8.0 | 3.36 | 3.1C | 2600 | moderate |
| Example 9 | LFP | graphite | 0.02 | 0.01 | 5.0 | 0.05 | 4.5C | 5100 | moderate |
| Example 10 | LFP | graphite | 0.27 | 0.23 | 15.0 | 3.45 | 3.9C | 4300 | very high |
| Example 11 | LFP | graphite | 0.27 | 0.23 | 18.0 | 4.14 | 3.7C | 4100 | very high |
| Example 12 | LFP | graphite | 0.27 | 0.23 | 19.5 | 4.49 | 3.6C | 4000 | very high |
| Example 13 | LFP | graphite | 0.02 | 0.01 | 4.0 | 0.04 | 3.6C | 2300 | lower |
| Example 14 | LFP | graphite | 0.35 | 0.33 | 20.0 | 6.60 | 3.0C | 2400 | very high |
| Example 15 | LFP | hard carbon | 0.03 | 0.02 | 8.0 | 0.16 | 4.0C | 3500 | moderate |
| Example 16 | LFP | hard carbon | 0.50 | 0.20 | 8.0 | 1.60 | 3.0C | 3300 | moderate |
| Example 17 | NCM 811 | mixture of graphite and silicon oxide with a mass ratio of 8:2 | 0.03 | 0.01 | 8.0 | 0.08 | 4.3C | 1650 | moderate |
| Example 18 | NCM 811 | mixture of graphite and silicon oxide with a mass ratio of 8:2 | 0.50 | 0.46 | 8.0 | 3.68 | 3.3C | 1500 | moderate |
| Comparative example 1 | LFP | graphite | 0.01 | 0.007 | 8.0 | 0.06 | 3.6C | 450 | moderate |
| Comparative example 2 | LFP | graphite | 0.60 | 0.35 | 8.0 | 2.80 | 1.2C | 180 | moderate |
| Comparative example 3 | LFP | hard carbon | 0.01 | 0.005 | 8.0 | 0.04 | 3.6C | 350 | moderate |
| Comparative example 4 | LFP | hard carbon | 0.60 | 0.40 | 8.0 | 3.20 | 1.2C | 160 | moderate |
| Comparative example 5 | NCM 811 | mixture of graphite and silicon oxide with a mass ratio of 8:2 | 0.01 | 0.008 | 8.0 | 0.06 | 3.6C | 280 | moderate |

(continued)

|  | Positive active material | Negative active material | (A+B) /X | A/X | CW (mg/cm$^2$) | (A/X) ×CW | Maximum charge rate | Cycle number | Measured energy density |
|---|---|---|---|---|---|---|---|---|---|
| Comparative example 6 | NCM 811 | mixture of graphite and silicon oxide with a mass ratio of 8:2 | 0.60 | 0.40 | 8.0 | 3.20 | 1.2C | 130 | moderate |

It could be seen from the test results of table 1: when the selected negative active materials of the lithium-ion batteries prepared in examples 1-18 were tested in a button half battery, the selected negative active materials all satisfied a relationship $0.02 \leq (A+B)/X \leq 0.50$, the polarization of the negative active material was smaller, the negative active material had better dynamics performance, the solid phase conduction process with respect to the lithium ions in the negative active material was easier, the weight of the negative active material coated on the unit area of the negative current collector could be maintained at a higher level, therefore the battery could have long cycle life, high energy density and fast charging capability at the same time.

Compared with examples 1-18, the obtained values of (A+B)/X from the selected negative active materials of comparative examples 1-6 were not fall within the range (that was $0.02 \leq (A+B)/X \leq 0.50$) when the selected negative active materials were tested in a button half battery, the battery could not have long cycle life, high energy density and fast charging capability at the same time.

As could be seen from the comparison among examples 15-18 and comparative examples 3-6, when the battery selected different kinds of positive active materials and different kinds of negative active materials, as long as the selected negative active material satisfied a relationship $0.02 \leq (A+B)/X \leq 0.50$ while being tested in a button half battery, the battery could have long cycle life, high energy density and fast charging capability at the same time.

Moreover, when the polarization of the negative active material was smaller and the dynamics performance of the negative active material was better, if the polarization of the negative active material characterized by A/X and the coating weight of the negative electrode plate per unit area represented by CW were further reasonably adjusted to satisfy a relationship $0.05 \leq (A/X) \times CW \leq 4.50$, the battery could have higher fast charging capability without compromising the energy density.

## Claims

1. A secondary battery comprising a positive electrode plate, a negative electrode plate, an electrolyte and a separator, the negative electrode plate comprising a negative current collector and a negative film, the negative film being provided on at least one surface of the negative current collector and comprising a negative active material;

   wherein
   the negative active material comprises graphite;
   the negative active material is obtained by the process of being tested in a button half battery:

   the button half battery is discharged to 5 mV at a constant current of 0.05 C, and the obtained capacity is recorded as X;
   then the button half battery is discharged to 5 mV at a constant current of 50 μA, and the obtained capacity is recorded as A;
   then the button half battery is discharged to 5 mV at a constant current of 10 μA, and the obtained capacity is recorded as B;
   and the polarisation of the negative active material satisfies $0.02 \leq (A+B)/X \leq 0.50$; wherein the negative electrode plate satisfies a relationship: $0.05 \leq (A/X) \times CW \leq 2.00$, CW represents a coating weight of the negative electrode plate per unit area with a unit of mg/cm$^2$; and
   wherein the positive electrode plate comprises a positive current collector and a positive film, the positive film is provided on at least one surface of the positive current collector and comprises a positive active material, the positive active material is one or more selected from a group consisting of lithium nickel cobalt manganese oxide, lithium nickel cobalt aluminum oxide and olivine-type lithium-containing phosphate.

2.  The secondary battery according to Claim 1, wherein when the negative active material is tested in a button half battery, the negative active material satisfies a relationship:

$$0.02 \leq (A+B)/X \leq 0.27.$$

3.  The secondary battery according to Claim 2, wherein when the negative active material is tested in a button half battery, the negative active material satisfies a relationship:

$$0.02 \leq (A+B)/X \leq 0.05.$$

4.  The secondary battery according to Claim 1, wherein the negative electrode plate satisfies a relationship: $0.08 \leq (A/X) \times CW \leq 0.32$.

5.  The secondary battery according to Claim 1, wherein $0.01 \leq A/X \leq 0.25$.

6.  The secondary battery according to Claim 5, wherein $0.01 \leq A/X \leq 0.04$.

7.  The secondary battery according to any one of Claims 1 or 4, wherein the coating weight of the negative electrode plate per unit area represented by CW is 4 mg/cm$^2$~15 mg/cm$^2$.

8.  The secondary battery according to Claim 7, wherein the coating weight of the negative electrode plate per unit area represented by CW is 8.0 mg/cm$^2$~15 mg/cm$^2$.

9.  The secondary battery according to Claim 1, wherein an active specific surface area of the negative electrode plate is 2 cm$^2$/g~12 cm$^2$/g.

10. The secondary battery according to Claim 1, wherein the graphite is one or more selected from a group consisting of artificial graphite and natural graphite.

11. The secondary battery according to Claim 1, wherein the negative active material further comprises one or more selected from a group consisting of soft carbon, hard carbon and silicon-based material.

12. The secondary battery according to Claim 11, wherein the negative active material further comprises silicon-based material, the silicon-based material is one or more selected from a group consisting of elemental silicon, silicon oxide, silicon carbon composite and silicon alloy.

**Patentansprüche**

1.  Sekundärbatterie, aufweisend eine positive Elektrodenplatte, eine negative Elektrodenplatte, einen Elektrolyten und einen Separator, wobei die negative Elektrodenplatte einen negativen Stromkollektor und eine negative Folie aufweist, wobei die negative Folie auf mindestens einer Oberfläche des negativen Stromkollektors vorgesehen ist und ein negatives Aktivmaterial aufweist;

    wobei
    das negative Aktivmaterial Graphit aufweist;
    das negative Aktivmaterial durch das Verfahren des Testens in einer Knopfbatterie erhalten wird:

    die Knopfbatterie wird bei einem konstanten Strom von 0,05 C auf 5 mV entladen, und die erhaltene Kapazität als X aufgezeichnet;
    dann wird die Knopfbatterie bei einem konstanten Strom von 0,05 C auf 5 mV entladen, und die erhaltene Kapazität als A aufgezeichnet;
    dann wird die Knopfbatterie bei einem konstanten Strom von 10 μA auf 5 mV entladen, und die erhaltene Kapazität als B aufgezeichnet;
    und die Polarisation des negativen Aktivmaterials erfüllt $0,02 \leq (A+B)/X \leq 0,50$;

wobei die negative Elektrodenplatte eine Beziehung erfüllt: $0{,}05{\leq}(A/X){\times}CW{\leq}2{,}00$, wobei CW ein Beschichtungsgewicht der negativen Elektrodenplatte pro Flächeneinheit mit einer Einheit von mg/cm$^2$ darstellt; und

wobei die positive Elektrodenplatte einen positiven Stromkollektor und eine positive Folie aufweist, die positive Folie auf mindestens einer Oberfläche des positiven Stromkollektors vorgesehen ist und ein positives Aktivmaterial aufweist, wobei es sich bei dem positiven Aktivmaterial um eines oder mehrere ausgewählt aus einer Gruppe bestehend aus Lithium-Nickel-Kobalt-Manganoxid, Lithium-Nickel-Kobalt-Aluminiumoxid und olivinartigem Lithium enthaltenden Phosphat handelt.

2. Sekundärbatterie nach Anspruch 1, wobei, wenn das negative Aktivmaterial in einer Knopfbatterie getestet wird, das negative Aktivmaterial eine Beziehung erfüllt:

$$0{,}02{\leq}(A+B)/X{\leq}0{,}27.$$

3. Sekundärbatterie nach Anspruch 2, wobei, wenn das negative Aktivmaterial in einer Knopfbatterie getestet wird, das negative Aktivmaterial eine Beziehung erfüllt:

4. Sekundärbatterie nach Anspruch 1, wobei die negative Elektrodenplatte eine Beziehung erfüllt:

$$0{,}08{\leq}(A/X){\times}CW{\leq}0{,}32.$$

5. Sekundärbatterie nach Anspruch 1, wobei $0{,}01{\leq}A/X{\leq}0{,}25$.

6. Sekundärbatterie nach Anspruch 5, wobei $0{,}01{\leq}A/X{\leq}0{,}04$.

7. Sekundärbatterie nach einem der Ansprüche 1 oder 4, wobei das Beschichtungsgewicht der negativen Elektrodenplatte pro Flächeneinheit, dargestellt durch CW, 4 mg/cm$^2$~15 mg/cm$^2$ beträgt.

8. Sekundärbatterie nach Anspruch 7, wobei das Beschichtungsgewicht der negativen Elektrodenplatte pro Flächeneinheit, dargestellt durch CW, 8,0 mg/cm$^2$~15 mg/cm$^2$ beträgt.

9. Sekundärbatterie nach Anspruch 1, wobei eine aktive spezifische Oberfläche der negativen Elektrodenplatte 2 cm$^2$/g~12 cm$^2$/g beträgt.

10. Sekundärbatterie nach Anspruch 1, wobei es sich bei dem Graphit um eines oder mehreres ausgewählt aus einer Gruppe bestehend aus künstlichem Graphit und natürlichem Graphit handelt.

11. Sekundärbatterie nach Anspruch 1, wobei das negative Aktivmaterial zusätzlich eines oder mehrere ausgewählt aus einer Gruppe bestehend aus Weichkohlenstoff, Hartkohlenstoff und siliziumbasiertem Material aufweist.

12. Sekundärbatterie nach Anspruch 11, wobei das negative Aktivmaterial zusätzlich siliziumbasiertes Material aufweist, wobei das siliziumbasierte Material eines oder mehrere ausgewählt aus einer Gruppe bestehend aus elementarem Silizium, Siliziumoxid, Siliziumkohlenstoffverbundwerkstoff und einer Siliziumlegierung aufweist.

**Revendications**

1. Batterie secondaire comprenant une plaque d'électrode positive, une plaque d'électrode négative, un électrolyte et un séparateur, la plaque d'électrode négative comprenant un collecteur de courant négatif et un film négatif, le film négatif étant prévu sur au moins une surface du collecteur de courant négatif et comprenant un matériau actif négatif ;

le matériau actif négatif comprenant du graphite ;
le matériau actif négatif étant obtenu par le processus de test dans une demi-pile bouton :

la demi-pile bouton étant déchargée jusqu'à 5 mV à un courant constant de 0,05 C, et la capacité obtenue étant notée X ;

ensuite, la demi-pile bouton étant déchargée jusqu'à 5 mV à un courant constant de 50 μA, et la capacité obtenue étant notée A ;

ensuite, la demi-pile bouton étant déchargée jusqu'à 5 mV à un courant constant de 10 μA, et la capacité obtenue étant notée B ;

et la polarisation du matériau actif négatif répondant à $0,02 \leq (A+B)/X \leq 0,50$ ;

la plaque d'électrode négative répondant à une relation : $0,05 \leq (A/X) \times CW \leq 2,00$, CW représentant un poids de revêtement de la plaque d'électrode négative par unité de surface avec une unité de mg/cm$^2$ ; et

la plaque d'électrode positive comprenant un collecteur de courant positif et un film positif, le film positif étant prévu sur au moins une surface du collecteur de courant positif et comprenant un matériau actif positif, le matériau actif positif étant un ou plusieurs éléments choisis dans le groupe comprenant de l'oxyde de lithium nickel cobalt manganèse, de l'oxyde de lithium nickel cobalt aluminium et du phosphate contenant du lithium de type olivine.

2. Batterie secondaire selon la revendication 1, lorsque le matériau actif négatif est testé dans une demi-pile bouton, le matériau actif négatif répondant à une relation : $0,02 \leq (A+B)/X \leq 0,27$.

3. Batterie secondaire selon la revendication 2, lorsque le matériau actif négatif est testé dans une demi-pile bouton, le matériau actif négatif répondant à une relation : $0,02 \leq (A+B)/X \leq 0,05$.

4. Batterie secondaire selon la revendication 1, la plaque d'électrode négative répondant à une relation : $0,08 \leq (A/X) \times CW \leq 0,32$.

5. Batterie secondaire selon la revendication 1, dans laquelle $0,01 \leq A/X \leq 0,25$.

6. Batterie secondaire selon la revendication 5, dans laquelle $0,01 \leq A/X \leq 0,04$.

7. Batterie secondaire selon l'une quelconque des revendications 1 ou 4, le poids de revêtement de la plaque d'électrode négative par unité de surface représenté par CW étant de 4 mg/cm$^2$ - 15 mg/cm$^2$

8. Batterie secondaire selon la revendication 7, le poids de revêtement de la plaque d'électrode négative par unité de surface représenté par CW étant de 8,0 mg/cm$^2$ - 15 mg/cm$^2$.

9. Batterie secondaire selon la revendication 1, une surface spécifique active de la plaque d'électrode négative étant de 2 cm$^2$/g ~ 12 cm$^2$/g.

10. Batterie secondaire selon la revendication 1, le graphite étant un ou plusieurs éléments choisis dans un groupe comprenant du graphite artificiel ou du graphite naturel.

11. Batterie secondaire selon la revendication 1, le matériau actif négatif comprenant en outre un ou plusieurs éléments choisis dans un groupe comprenant du carbone souple, du carbone dur et un matériau à base de silicium.

12. Batterie secondaire selon la revendication 11, le matériau actif négatif comprenant en outre un matériau à base de silicium, le matériau à base de silicium étant un ou plusieurs éléments choisis parmi un groupe comprenant un silicium élémentaire, un oxyde de silicium, un composite silicium carbone et un alliage de silicium.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201811209254
- WO 2017104145 A1
- US 2010233543 A